# EUROPEAN PATENT SPECIFICATION

(11) **EP 4 388 911 B1**
(45) Date of publication and mention of the grant of the patent: **01.04.2026**
(21) Application number: 23218963.9
(22) Date of filing: 21.12.2023
(51) Int. Cl.: A41D 31/28, A41D 13/05, A41D 13/015, A41D 13/06

(54) **LATTICE STRUCTURE AND METHOD OF MANUFACTURE**
GITTERSTRUKTUR UND HERSTELLUNGSVERFAHREN
STRUCTURE EN TREILLIS ET PROCÉDÉ DE FABRICATION

(30) Priority: 22.12.2022 US 202263434761 P
(43) Date of publication of application: 26.06.2024
(73) Proprietor: Unknown Behaviours Ltd., Motherwell, Scotland ML1 3JE (GB)
(72) Inventor: Croll, Jessie, Motherwell, Scotland, ML1 3JE (GB)
(74) Representative: Lucke, Andreas

(56) References cited:
- EP-A1- 4 029 683
- WO-A2-2022/125311
- US-B2- 10 779 614

## Description

### Field Of The Disclosure

The present disclosure relates to a 3D printed lattice structure, and specifically relates to an open cell tubular lattice structure that, when incorporated into protective gear, provides air-permeable impact absorption with stretch and flexibility.

### Background

Various sports and professions involve activity that can cause soft-tissue damage or other injuries. For example, some sports involve high impact contact and collisions as a part of regular play (e.g., American football, ice hockey, and water polo). Even sports with limited or no player contact may involve a risk of collisions with equipment, a risk of crashing, or a risk of falling (e.g., baseball, skiing, and horseback riding). Professionals in certain industries, such as law enforcement, military, and construction, are also at risk for soft-tissue damage when performing their work duties.

Protective padding can reduce the risk of soft-tissue damage or other injuries, but traditional protective padding is hot, bulky, and can limit a wearer's mobility. Unless protective padding is required by sport or work regulations, many athletes and professionals opt to take the risk of injury rather than compromise their performance.
EP 4 029 683 A1 discloses a three-dimensional microlattice layer comprising a plurality of interconnected filaments extending along at least three different directions from a plurality of nodes. The microlattice layer may further comprise at least one material layer extending laterally between and interconnecting at least two or more nodes. The at least one material layer may be configured to transversely and rotationally constrain the nodes to increase the overall compressive strength and stiffness of the microlattice structure. The at least one material layer may comprise a single, continuous layer and/or a plurality of material layer segments. The microlattice layer may comprise a single, continuous layer or a plurality of microlattice layer segments. The microlattice layer may be stacked, the stacked microlattice layers may further comprise one or more material layers and/or one or more impact mitigation layers.
US 10,779,614 B2 discloses a cushioning for a sole structure for an article of footwear. The cushioning is a three-dimensionally printed cushioning formed from a plurality of cells. Each cell in the plurality of cells includes a lattice of elongate structures that extend symmetrically around an offset axis. The elongate structures of adjacent cells in the plurality of cells connect so that the plurality of cells form a unitary structure and, as the elongate structures of each cell are compressed by a compressive force, the elongate structures of each cell create a lateral shear. As the compressive force is released, the elongate structures return to a rest position, exerting a restorative force on the insole and/or upper of an article of footwear in which the cushioning is included.
WO 2022/125311 A2 discloses an impact attenuation lattice structure according to the preamble of claim 1, including a plurality of unit cells. Each of the plurality of unit cells has a horizontal plane, a central axis, and a plurality of struts that form a plurality of sidewall frames. Each of the plurality of sidewall frames are angled relative to the central axis and the horizontal plane is perpendicular to the central axis. The plurality of unit cells are connected to one another to form a lattice structure. A first unit cell of the plurality of unit cells share one sidewall frame of the plurality of sidewall frames with a second unit cell of the plurality of unit cells adjacent to the first unit cell. The second unit cell is in an inverted position about the horizontal plane compared to the first unit cell.

### Summary

In accordance with the invention, a lattice structure includes a first layer, a second layer, and a channel. The first layer includes a plurality of interior cells arranged along a first axis and a second axis that is perpendicular to the first axis, adjacent interior cells along the first axis being interconnected and adjacent interior cells along the second axis being interconnected. The second layer is disposed on and overlays the first layer and is located above the first layer. The second layer includes a plurality of exterior cells arranged along the first axis and the second axis, adjacent exterior cells along the first axis being unconnected. The channel is formed between unconnected adjacent exterior cells above interconnected adjacent interior cells.

In some forms, adjacent exterior cells along the second axis may be interconnected.

In some forms, adjacent exterior cells along the second axis may be unconnected. The channel may be a first channel formed by the adjacent exterior cells along the first axis being unconnected. The lattice structure may further include a second channel formed by the adjacent exterior cells along the second axis being unconnected.

In some forms, each exterior cell may have an upper tubular frame and a lower tubular frame, the adjacent exterior cells along the second axis being interconnected by sharing a portion of the upper tubular frame that is oriented along the first axis and a portion of the lower tubular frame that is oriented along the first axis.

In some forms, the adjacent exterior cells along the first axis may be offset from one another along the second axis.

In some forms, the adjacent exterior cells along the second axis may be offset from one another along the first axis.

In some forms, each exterior cell may have an upper tubular frame and a lower tubular frame, a portion of the upper tubular fame and the lower tubular frame that is not oriented along the first axis defining a side of the channel.

In some forms, each interior cell may have a base tubular frame, the adjacent interior cells along the second axis being interconnected by sharing a portion of the base tubular frame that is oriented along the first axis.

In some forms, each interior cell may have a plurality of compound connections, each compound connection connected by a base tubular extension to a base eye, by a base segment to a base tubular frame, and by a joining tubular extension to a lower eye of an exterior cell, the compound connection defining a bottom of the channel.

In some forms, each exterior cell may have a central axis, an upper eye, upper tubular extensions, an upper tubular frame, a lower tubular frame, lower tubular extensions, and a lower eye. The upper eye may be defined by a tubular structure surrounding the central axis and having a first opening at the central axis. The upper eye may be positioned at a top of the second layer. The upper tubular extensions may be connected to the upper eye, and the upper tubular extensions may extend downward from the upper eye. The upper tubular frame may have upper segments. The upper segments may be connected to one another and to the upper tubular extensions at upper joints. The upper segments may be connected to one another and unconnected to the upper tubular extensions at frame connections. The upper joints may be disposed above the frame connections. The lower tubular frame may have lower segments. The lower segments may be connected to one another and to the upper segments at the frame connections. The lower segments may be connected to one another and unconnected to the upper segments at lower joints. The frame connections may be disposed above the lower joints. The lower tubular extensions may be connected to the lower tubular frame at the lower joints, and the lower tubular extensions may extend downward from the lower joints. The lower eye may be defined by a tubular structure surrounding the central axis and having a second opening at the central axis. The lower eye may be connected to the lower tubular extensions.

In some forms, each interior cell may have a central axis, a base eye, base tubular extensions, a base tubular frame, a dampening tubular frame, and joining tubular extensions. The base eye may be defined by a tubular structure surrounding the central axis and having a base opening at the central axis. The base eye may be positioned at a bottom of the first layer. The base tubular extensions may be connected to the base eye and extend upward. The base tubular frame may have base segments. The base segments may be connected only to one another and to the base tubular extensions at base joints. The dampening tubular frame may have dampening extensions. The dampening extensions may be connected to the base segments at base connections. The base connections may be disposed above the base joints, and joining tubular extensions may be configured to connect to the second layer. The joining tubular extensions may be connected to the dampening extensions at dampening joints. The dampening joints may be disposed above the base connections. The joining tubular extensions may be connected to the base segments and the base tubular extensions at compound connections.

In accordance with the invention, a lattice structure includes a first layer, a second layer, and a channel. The first layer has a plurality of cells arranged along a first axis and a second axis that is perpendicular to the first axis, adjacent cells of the first layer along the first axis being interconnected and adjacent cells of the first layer along the second axis being interconnected. The second layer is disposed on and overlays the first layer, the second layer including a plurality of cells arranged along the first axis and the second axis, adjacent cells of the second layer along the first axis being unconnected. The channel is formed between unconnected adjacent cells of the second layer and interconnected adjacent cells of the first layer.

In some forms, adjacent cells of the second layer along the second axis may be interconnected.

In some forms, adjacent cells of the second layer along the second axis may be unconnected. The channel may be a first channel formed by the adjacent cells of the second layer along the first axis being unconnected. The lattice structure may further include a second channel formed by the adjacent cells of the second layer along the second axis being unconnected.

In some forms, the lattice structure may include a first area where adjacent cells of the second layer along the second axis are interconnected and a second area where adjacent cells of the second layer along the second axis are unconnected.

In some forms, each cell of the first layer may have an upper tubular frame and a lower tubular frame. The adjacent cells of the first layer along the second axis may be interconnected by sharing a portion of the upper tubular frame that is oriented along the first axis and a portion of the lower tubular frame that is oriented along the first axis.

In some forms, the adjacent cells of the first layer along the first axis may be offset from one another along the second axis.

In some forms, each cell of the first layer may have an upper tubular frame and a lower tubular frame. A portion of the upper tubular fame and the lower tubular frame that is not oriented along the first axis may define a side of the channel.

In some forms, each cell of the second layer may have a base tubular frame. The adjacent cells of the second layer along the second axis may be interconnected by sharing a portion of the base tubular frame that is oriented along the first axis.

In some forms, each cell of the second layer may have an upper tubular frame that is not shared with an adjacent cell and a lower tubular frame that is not shared with an adjacent cell.

In some forms, each cell of the second layer may have a plurality of compound connections. Each compound connection may be connected by a base tubular extension to a base eye, by a base segment to a base tubular frame, and by a joining tubular extension to a lower eye of a cell of the first layer. The compound connection may define a bottom of the channel.

In accordance with the invention, a method of manufacturing a protective pad including a lattice structure includes identifying a pattern for a lattice structure to facilitate folding the lattice structure to form an articulated protective structure. The method further includes forming a lattice structure by additive manufacturing according to the pattern. The lattice structure includes a first layer including a plurality of interior cells, a second layer disposed on and overlaying the first layer and including a plurality of exterior cells, and a plurality of channels formed between unconnected adjacent exterior cells above interconnected adjacent interior cells. The method further includes folding the lattice structure according to the pattern to form the articulated protective structure.

In some forms, the articulated protective structure may be configured to protect a human body part.

In some forms, the pattern may include tabs for connecting areas of the lattice structuring during folding .

In some forms, the articulated protective structure may be secured within a garment.

In some forms, the method may include securing the lattice structure within a housing comprising air-permeable fabric. The air-permeable fabric may be mesh.

### Brief Description of the Drawings

The figures described herein depict various aspects of the system and methods disclosed herein. It should be understood that each figure depicts an example of aspects of the present systems and methods.
FIG. 1 is a top view of a first anisotropic lattice structure for protective gear prior to folding and jointing.
FIG. 2A is a bottom view of a portion of a first layer of the first anisotropic lattice structure of FIG. 1.
FIG. 2B is a bottom view of an interior cell of the first layer of FIG. 2A.
FIG. 3A is a top view of a portion of a first layer of the first anisotropic lattice structure of FIG. 1.
FIG. 3B is a top view of an exterior cell of the second layer of FIG. 3A.
FIG. 4A is an exploded view of the exterior cell of FIG. 3B.
FIG. 4B is a side view of the exterior cell of FIGS. 3B and 4A.
FIG. 4C is a top view of the exterior cell of FIGS. 3B, 4A, and 4B illustrating placement of the exterior cell relative to other exterior cells.
FIG. 5A is an exploded view of the interior cell of FIG. 2B.
FIG. 5B is a side view of the exterior cell of FIGS. 2B and 5A.
FIG. 5C is a bottom view of the interior cell of FIGS. 2B, 5A, and 5B illustrating placement of the interior cell relative to other interior cells.
FIG. 6 is a cross-sectional view of the first anisotropic lattice structure of FIG. 1 taken along the line A-A of Fig. 1.
FIG. 7A is an isometric view of an anisotropic lattice structure for groin protection prior to folding and jointing.
FIG. 7B is an isometric view of the anisotropic lattice structure of FIG. 7A after folding and jointing.
FIG. 8A is a top schematic view of the second layer of the first anisotropic lattice structure depicted in FIGS. 1-6 with adjacent exterior cells interconnected along a second axis.
FIG. 8B is a top schematic view of a second layer of a second anisotropic lattice structure similar to that depicted in FIG. 9A but adjacent exterior cells unconnected along the second axis.
FIG. 9 is a perspective view of a protective pad for a knee on a mannequin, the protective pad including both the first and second anisotropic lattice structures of FIGS. 9A and 9B.
FIG. 10 is a perspective view of the protective pad of FIG. 10 illustrating a first area including the first anisotropic lattice structure and a second area including the second anisotropic lattice structure.
FIG. 11 is a perspective side view of the protective pad of FIGS. 10 and 11.
FIG. 12 illustrates schematically a method of manufacturing a protective pad including a lattice structure.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various examples. Also, common but well-understood elements that are useful or necessary in a commercially feasible embodiment are often not depicted in order to facilitate a less obstructed view of these various embodiments. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

### Detailed Description

The disclosed lattice structure may be 3D printed using elastomers that provide sufficient stability for open cell tubular lattices. The open cells allow air flow, thereby preventing overheating. Another result of the open tubular cells is that the lattice structure is lightweight. The dual layer arrangement and channel provides impact protection while simultaneously allowing the lattice structure to flex with the wearer's body, thereby limiting the impact on a wearer's range of motion. The lattice structure can be warped to contour to various body parts. Because the lattice structure is 3D printed, diversity in sizing can be achieved without significant increases in cost. For example, typical bra cups require expensive molds for foam cups. In contrast, a 3D printed bra cup using the disclosed lattice structure requires no such molds and can be offered in a variety of sizes to better fit diverse chest contours. The lattice structure may be manufactured using a custom material stiffness for the particular application desired, and the material may be biocompatible to limit the environmental impact.

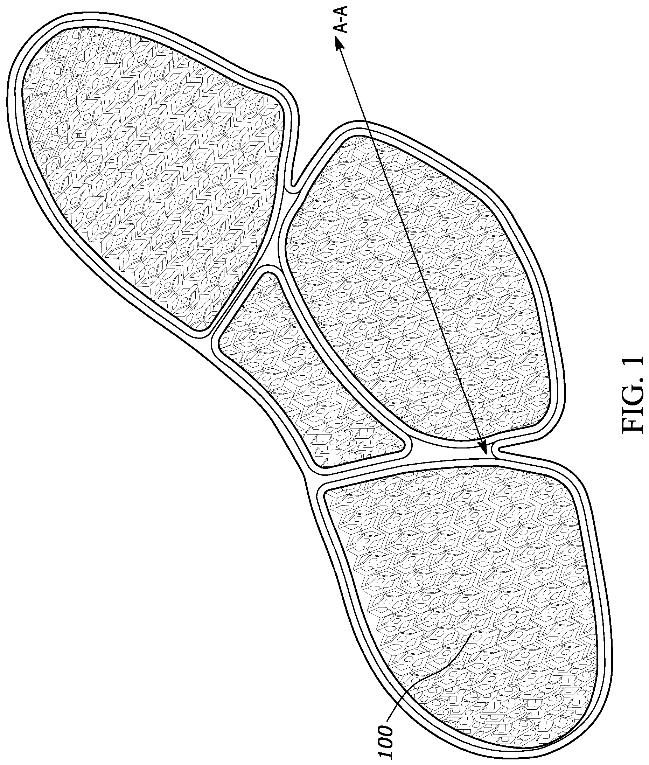

FIG. 1 is a top view of a first anisotropic lattice structure 100 for protective gear prior to folding and jointing. The first lattice structure 100 may be used in a variety of applications. For example, the first lattice structure 100 may be used in modular base layers, such as chest cups, pelvic cups, rib pads, and hip pads. The first lattice structure 100 may be incorporated as a breast cup in an impact bra. The first lattice structure 100 may be used in a strike plate, such as a chest plate, back plate, or side plate. The first lattice structure 100 may be folded to form protective padding and/or may be incorporated into a garment comprising other materials.

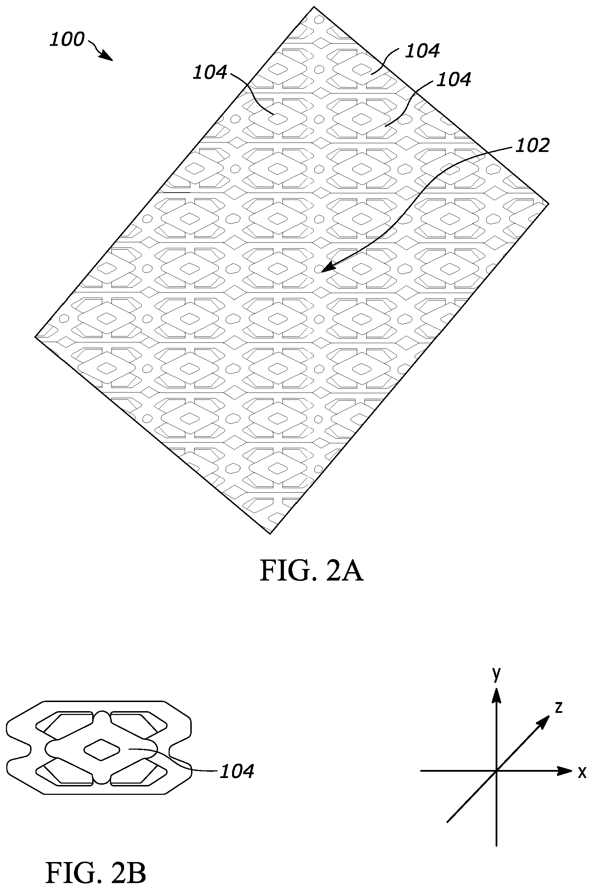

FIG. 2A is a bottom view of a portion of a first layer 102 of the first anisotropic lattice structure 100 of FIG. 1. The first layer 102 would typically be placed next to or closest to the skin of a wearer when the first lattice structure 100 is incorporated into protective gear. The first layer 102 includes a plurality of interior cells 104. FIG. 2B illustrates a bottom view of an interior cell 104 of the first layer 102. As shown in FIG. 2A, the plurality of interior cells 104 are arranged along a first axis (the x-axis) and a second axis (the y-axis) that is perpendicular to the first axis. Adjacent interior cells 104 along the first axis are interconnected and adjacent interior cells along the second axis are interconnected. Because the adjacent interior cells 104 are connected along both the first axis and the second axis, the first layer 102 provides stability for the first lattice structure 100.

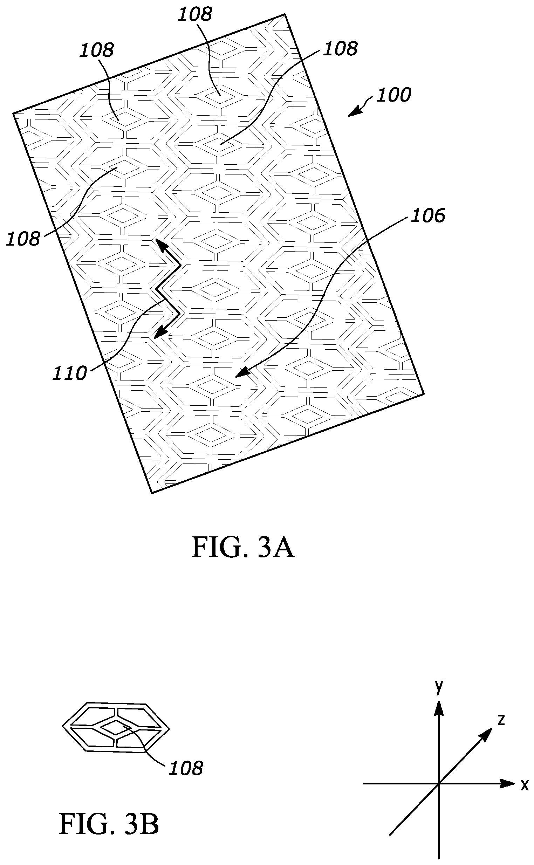

FIG. 3A is a top view of a second layer 106 of the first anisotropic lattice structure 100 of FIG. 1. The second layer 106 is disposed on and overlays the first layer 102 (shown in FIG. 2A). The second layer 106 is located above the first layer 102 on a third axis (the z-axis) that is perpendicular to both the first axis (the x-axis) and the second axis (the y-axis). The second layer 106 includes a plurality of exterior cells 108 arranged along the first axis and the second axis. FIG. 3B is a top view of an exterior cell 108 of the second layer 106 of FIG. 3A. As shown in FIG. 3A, adjacent exterior cells 108 along the first axis are unconnected and adjacent exterior cells 108 along the second axis are interconnected. A channel 110 is formed between unconnected adjacent exterior cells 108 above interconnected adjacent interior cells 104 (shown in FIG. 2A). In some arrangements, adjacent exterior cells 108 along the second axis may be unconnected in order to increase flexibility in certain regions of the first lattice structure 100. When the adjacent exterior cells 108 are arranged as shown in FIG. 3A, the channel 110 has a zigzag pattern. The channel 110 allows the second layer 106 some freedom of movement along both the first and second axes, thereby providing flexibility within the first lattice structure 100.

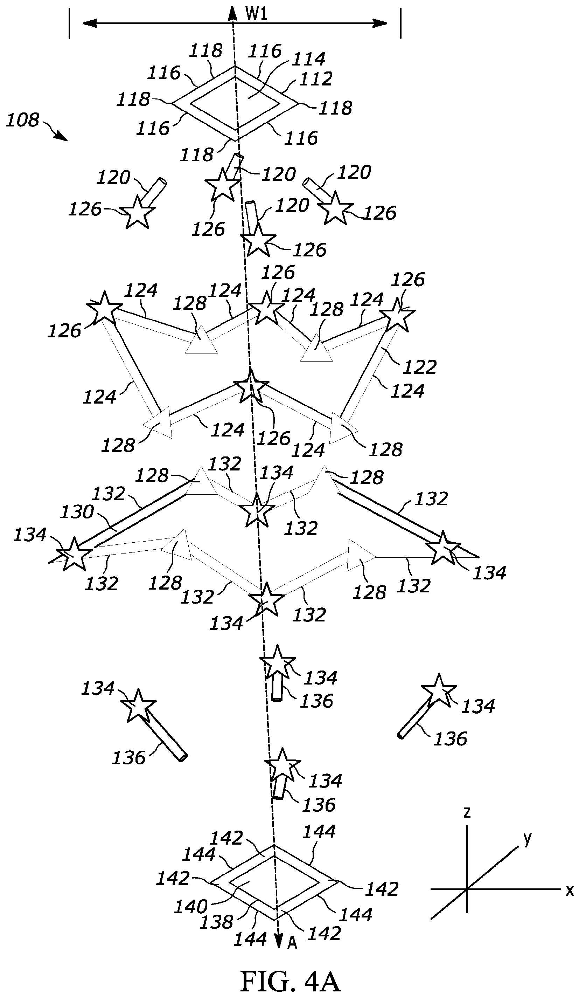

FIG. 4A is an exploded view of the exterior cell 108 of FIG. 3B along the third axis (the z-axis). The exterior cell 108 has a central axis A extending along the third axis. The size of the exterior cell 108 (for example, the width W1 relative to the central axis A) may be larger or smaller within certain regions or depths of the first lattice structure 100. An upper eye 112 is defined by a tubular structure surrounding the central axis A. The upper eye 112 has a first opening 114 at the central axis A. In the arrangement shown, the upper eye has four sides 116 that each meet at upper eye junctures 118. The upper eye 112 is positioned at a top of the second layer 106. Upper tubular extensions 120 are connected to the upper eye 112. The upper tubular extensions 120 extend downward from the upper eye 112. In the arrangement shown, four upper tubular extensions 120 are connected at the upper eye junctures 118, two of the four upper tubular extensions 120 extending outward from the upper eye 112 along the first axis and the other two of the four upper tubular extensions 120 extending outward from the upper eye 112 along the second axis.

As shown in FIG. 4A, the exterior cell 108 has an upper tubular frame 122 having upper segments 124. In the arrangement shown, the upper tubular frame 122 has eight upper segments 124. The upper segments 124 are connected to one another and to the upper tubular extensions 120 at upper joints 126. In the arrangement shown, the upper tubular frame 122 has four upper joints 126. The upper segments 124 are connected to one another and unconnected to the upper tubular extensions 120 and frame connections 128. In the arrangement shown, the upper tubular frame 122 has four frame connections 128. The upper joints 126 are disposed above the frame connections 128. During impact, the upper joints 126 and the frame connections 128 may become at least partially interlocked, helping to absorb the impact and distribute the load across the second layer 106.

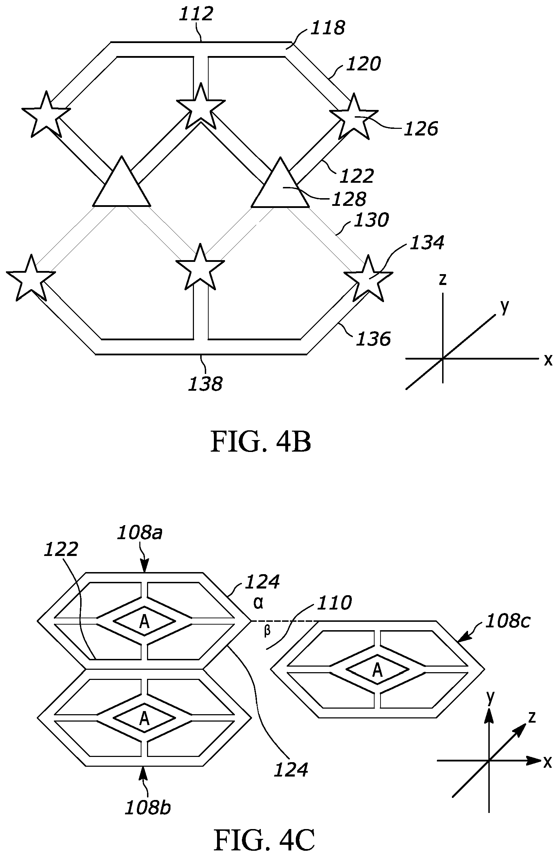

The exterior cell 108 also has a lower tubular frame 130 having lower segments 132. The lower segments 132 are connected to one another and to the upper segments 124 at the frame connections 128. The lower segments 132 are connected to one another and unconnected to the upper segments 124 at lower joints 134. In the arrangement shown, the lower tubular frame 130 has four lower joints 134. The frame connections 128 are disposed above the lower joints 134. In the arrangement shown, the lower tubular frame 130 and the upper tubular frame 122 are coplanar along the third axis. That is, each lower segment 132 is aligned with a respective upper segment 124 such that the exterior cell 108, when viewed from the top as shown in FIG. 4C, appears to have only one frame because the upper tubular frame 122 covers all of the lower tubular frame 130.

As shown in FIG. 4A, lower tubular extensions 136 are connected to the lower tubular frame 130 at the lower joints 134. The lower tubular extensions 136 extend downward from the lower joints 134. In the arrangement shown, the exterior cell 108 has four lower tubular extensions 136, two of the four lower tubular extensions 136 extending inward from the lower tubular frame 130 along the first axis and the other two of the four upper tubular extensions 136 extending inward from the lower tubular frame 130 along the second axis. The two of the four lower tubular extensions 136 extending inward along the first axis are coplanar (in the x-z plane) with respective two of the four upper tubular extensions 120. The other two of the four lower tubular extensions 136 extending inward along the second axis are coplanar (in the y-z plane). A lower eye 138 is defined by a tubular structure surrounding the central axis A and having a second opening 140 at the central axis. The lower eye 138 is connected to the lower tubular extensions 136 at lower eye junctures 142. In the arrangement shown, the lower eye 138 has four sides 144.

FIG. 4B is a side view of the exterior cell of FIGS. 3B and 4A. FIG. 4C is a top view of the exterior cell of FIGS. 3B and 4A illustrating placement of the exterior cell 108, 108a relative to other exterior cells 108b, 108c. As shown in FIG. 4C, a first exterior cell 108a is adjacent a second exterior cell 108b along the first axis and is adjacent a third exterior cell 108c along the second axis. The adjacent exterior cells 108a and 108b along the first axis are offset from one another along the second axis. That is, the central axis A of the first exterior cell 108a is offset along the second axis from the central axis A of the second exterior cell 108b. The staggering of the exterior cells 108a and 108b improves the stretch of the first lattice structure 100 while simultaneously providing adequate coverage for protection. The adjacent exterior cells 108a and 108c along the second axis are interconnected by sharing a portion of the upper tubular frame 122 that is oriented along the first axis and a portion of the lower tubular frame 130 (shown in FIGS. 4A and 4B) that is oriented along the first axis. For each of the exterior cells 108a, 108b, 108c, a portion of the respective upper tubular fame 122 and respective lower tubular frame 130 that is not oriented along the first axis defines a side of the channel 110. In particular, as shown in FIG. 4C, the side of the channel 110 is defined by a first upper segment 124 and a first lower segment 132 (shown in FIGS. 4A and 4B) coplanar along the third axis and disposed at a first angle α relative to the first axis of exterior cell 108a. As also shown in FIG. 4C, the side of the channel 110 is further defined by a second upper segment 124 and a second lower segment 132 (shown in FIGS. 4A and 4B) coplanar along the third axis and disposed at a second angle β relative to the first axis.

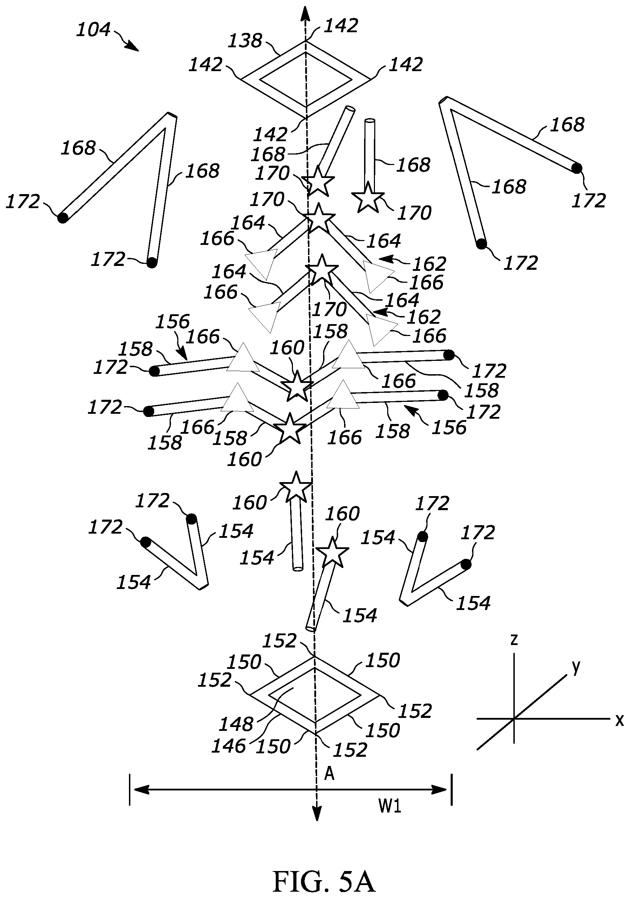

FIG. 5A is an exploded view of the interior cell 104 of FIG. 2B along the third axis (the z-axis). The interior cell 104 has a central axis A. The size of the interior cell 104 (for example, the width W2 relative to the central axis A) may be larger or smaller within certain regions or depths of the first lattice structure 100. A base eye 146 defined by a tubular structure surrounds the central axis A. The base eye 146 has a base opening 148 at the central axis A. In the arrangement shown, the base eye 146 has four sides 150 that each meet at base eye junctures 152. The base eye 146 is positioned at a bottom of the first layer 102. Base tubular extensions 154 connect to the base eye 146 and extend upward. In the arrangement shown, six base tubular extensions 154 are connected to the base eye 146. At two of the base eye junctures 152, two of the six base tubular extensions 154 are connected and extend outward from the base eye 146 at angles relative to the first axis. At two of the base eye junctures 152, just one of the six base tubular extensions 154 are connected and extend outward from the base eye 146 along the second axis.

As shown in FIG. 5A, a base tubular frame 156 has base segments 158. The base segments 158 are connected only to one another and to the base tubular extensions 154 at base joints 160. A dampening tubular frame 162 has dampening extensions 164. The dampening extensions 164 are connected to the base segments 158 at base connections 166 that are disposed above the base joints 160.

Joining tubular extensions 168 are configured to connect to the second layer 106. Specifically, the joining tubular extensions 168 are configured to connect to the lower eye junctures 142 of the lower eye 138. The arrangement shown has six joining tubular extensions 168. At two of the lower eye junctures 142, two of the six joining tubular extensions 168 are configured to connect and to extend outward from the lower eye 138 at angles relative to the first axis. At two of the lower eye junctures 142, just one of the six joining tubular extensions 168 are configured to connect and extend outward from the lower eye 138 along the second axis. The joining tubular extensions 168 are connected to the dampening extensions 164 at dampening joints 170. The dampening joints 170 are disposed above the base connections 166.

The joining tubular extensions 168 are connected to the base segments 158 and the base tubular extensions 154 at compound connections 172. Each compound connection 172 is connected by a base tubular extension 154 to the base eye 146, by a base segment 158 to the base tubular frame 156, and by a joining tubular extension 168 to the lower eye 138 of an exterior cell 108, and each compound connection 172 defines a bottom of the channel 110.

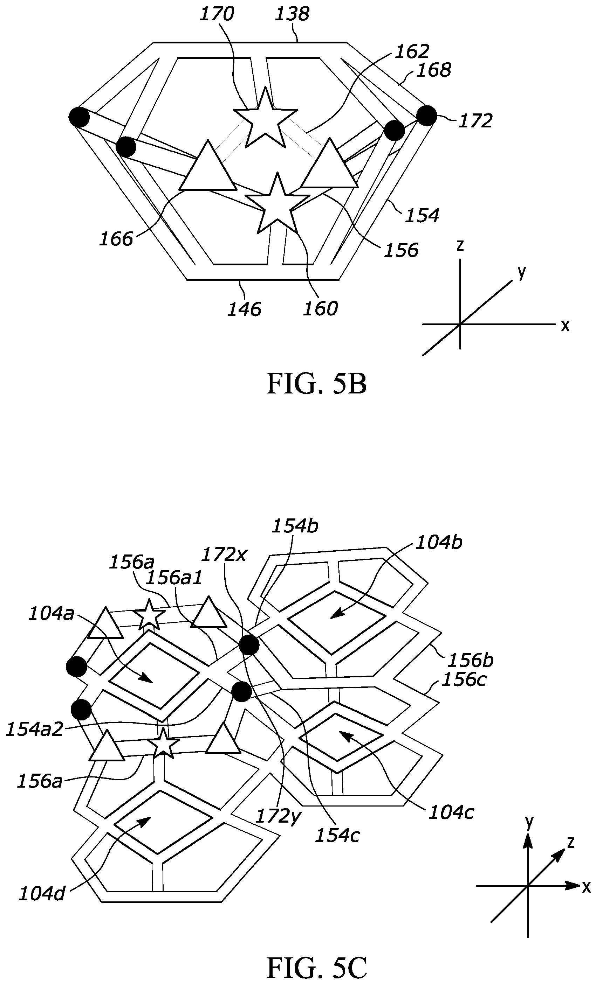

FIG. 5B is a side view of the exterior cell of FIGS. 2B and 5A. FIG. 5C is a bottom view of the interior cell 104 of FIGS. 2B, 5A, and 5B illustrating placement of an interior cell 104, 104a relative to other interior cells 104, 104b, 104c, 104d. Specifically, FIG. 5C shows a first interior cell 104a beside a second interior cell 104b along the first axis, beside a third interior cell 104c along the first axis, and beside a fourth interior cell 104d along the second axis. The base tubular frame 156a of the first interior cell 104a is interconnected with the base tubular frame 156b second interior cell 104b by sharing a compound connection 172x, and the base tubular frame 156a of the first interior cell 104a is interconnected with the base tubular frame 156c of the third interior cell 104c by sharing a compound connection 172y. The compound connection 172x is further connected to a base tubular extension 154a1 of the first interior cell, a base tubular extension 154b of the second interior cell, a joining tubular extension 168 of the first interior cell 104a (see FIG. 5A), and a joining tubular extension 168 of the second interior cell 104b (see FIG. 5A). The compound connection 172y is further connected to a base tubular extension 154a2 of the first interior cell 104a, a base tubular extension 154c of the third interior cell 104c, a joining tubular extension 168 of the first interior cell 104a (see FIG. 5A), and a joining tubular extension 168 (see FIG. 5A) of the third interior cell 104c. A portion of the base tubular frame 156a of the first interior cell 104a that is oriented along the first axis is shared with the fourth interior cell 104d.

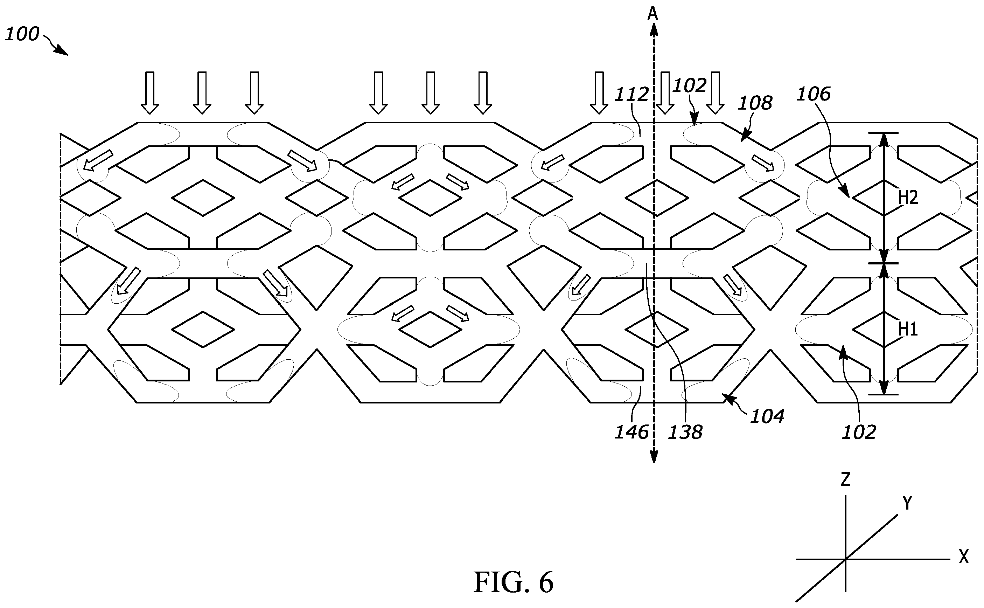

FIG. 6 is a cross-sectional view of the first anisotropic lattice structure 100 of FIG. 1. The central axis A of an interior cell 104 is aligned with the central axis A of an exterior cell 108. The base eye 146 is positioned below the lower eye 138 and the lower eye 138 is positioned below the upper eye 112. As shown by the arrows, a force applied to the first layer 102 (including the exterior cell 108) is distributed throughout the first lattice structure 100, enabling the first lattice structure 100 to distribute and dissipate the impact force over the entire area of the first lattice structure 100. The first layer 102 has a first height H1, and the second layer 104 has a second height H2. In the arrangement shown, the first height H1 and the second height H2 are substantially the same. In other arrangements, the first height H1 and the second H2 may differ.

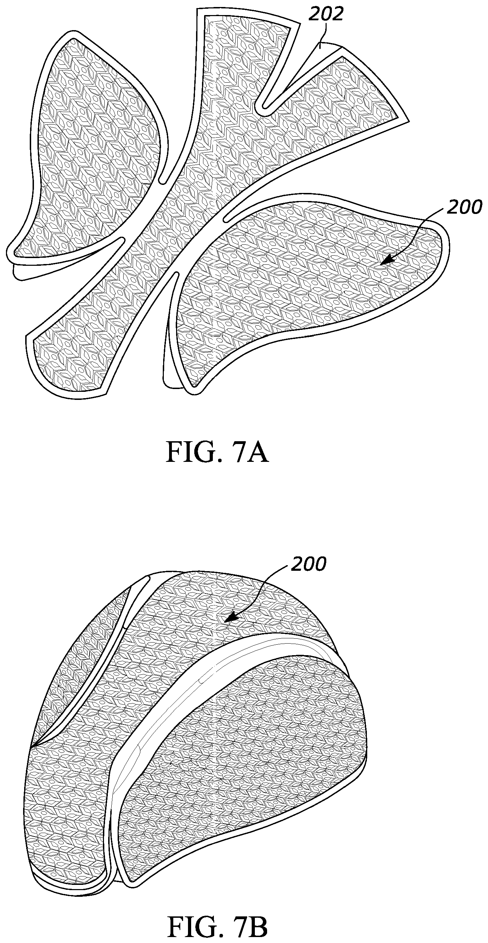

FIG. 7A is an isometric view of a lattice structure 200 for groin protection prior to folding and jointing. As shown, the anisotropic lattice structure 200 includes tabs 202 for securing the lattice structure 200 during in a folded configuration. FIG. 7B is an isometric view of the anisotropic lattice structure of FIG. 7A after folding and jointing.

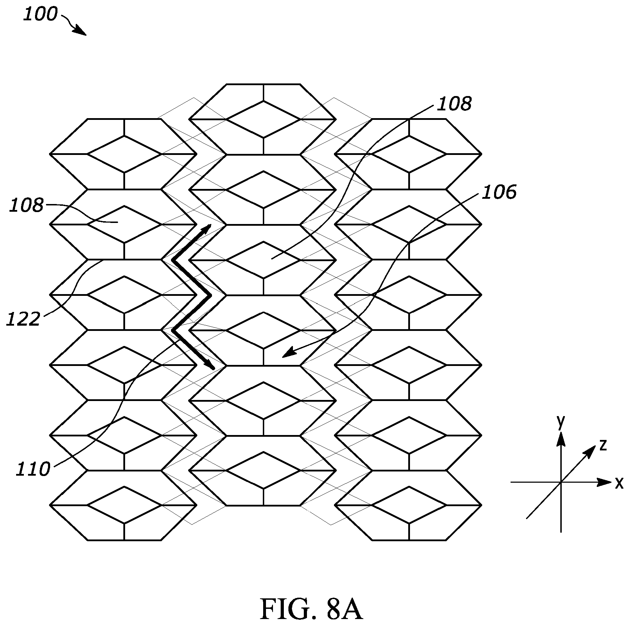

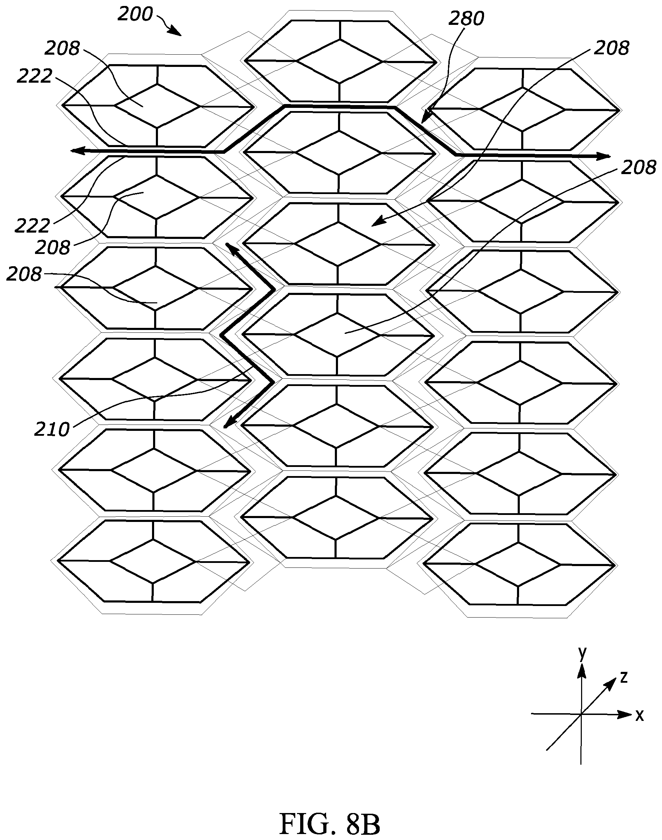

FIG. 8A illustrates schematically the second layer 106 of the first anisotropic lattice structure 100 in a manner like the depiction described with respect to FIG. 3A above. FIG. 8B illustrates schematically a second anisotropic lattice structure 200. The second anisotropic lattice structure 200 is substantially similar to the first anisotropic lattice structure 100. Elements of the second anisotropic lattice structure 200 depicted in FIG. 8B are designated by similar reference numbers indicated on the arrangements illustrated in FIGS. 1-8A increased by 100. Accordingly, these features will not be described in substantial detail. Further, it is appreciated that any combination or sub-combination of features described in regard to the first anisotropic lattice structure 100 may be incorporated into the second anisotropic lattice structure 200, and vice versa.

As shown, the second anisotropic lattice structure 200 includes second layer 206 that is disposed on and overlays the first layer 202. The second layer 206 is located above the first layer 202 on a third axis (the z-axis) that is perpendicular to both the first axis (the x-axis) and the second axis (the y-axis). The second layer 206 includes a plurality of exterior cells 208 arranged along the first axis and the second axis. Unlike the first anisotropic lattice structure 100 depicted in FIG. 8A, where adjacent exterior cells 108 along the first axis are unconnected and adjacent exterior cells 108 along the second axis are interconnected, adjacent exterior cells 208 in the second lattice structure 200 depicted in FIG. 8B are unconnected along both the first and second axes.

More specifically, adjacent exterior cells 208a and 208c along the second axis are unconnected so do not share a portion of the upper tubular frame 122 that is oriented along the first axis or a portion of the lower tubular frame 130 as described with respect to the first lattice structure 100. Instead, each of the adjacent exterior cells 208 has an upper tubular frame 222 that is offset from the upper tubular frame 222 of other adjacent exterior cells 208, and a lower tubular frame 230 that is offset from the lower tubular frame 230 of other adjacent exterior cells 208. (The lower tubular frame 230 is not visible in Figure 8B because it is located below the upper tubular frame 222 but is substantially similar to the lower tubular frame depicted in FIGS. 4A and 4B). Therefore, the second lattice structure 200 includes both a plurality of first channels 210 and a plurality of second channels 280. As a result, the second lattice structure 200 has greater freedom of movement along the first and second axes than the first lattice structure 100 and provides greater flexibility.

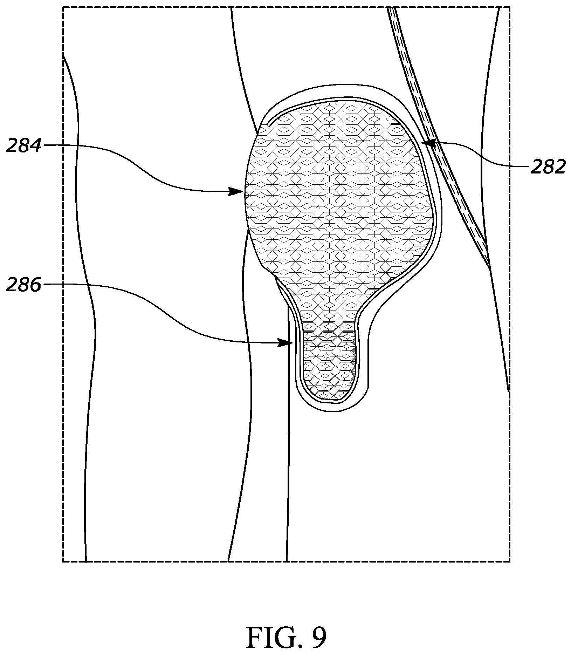

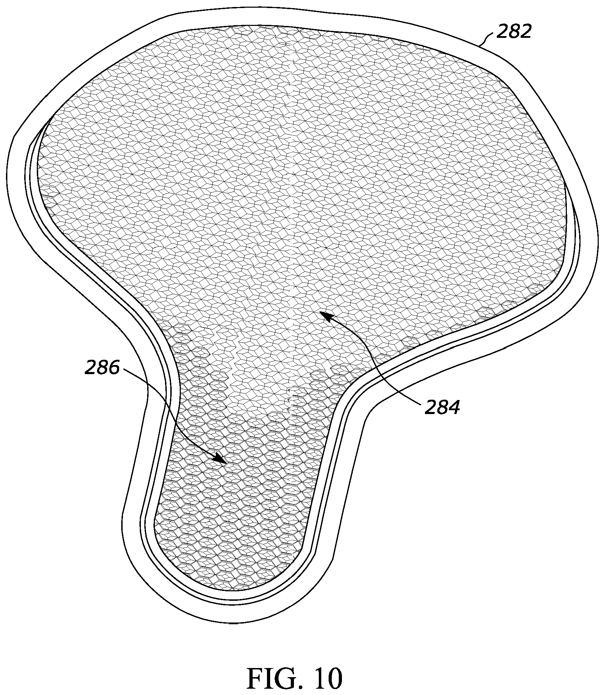

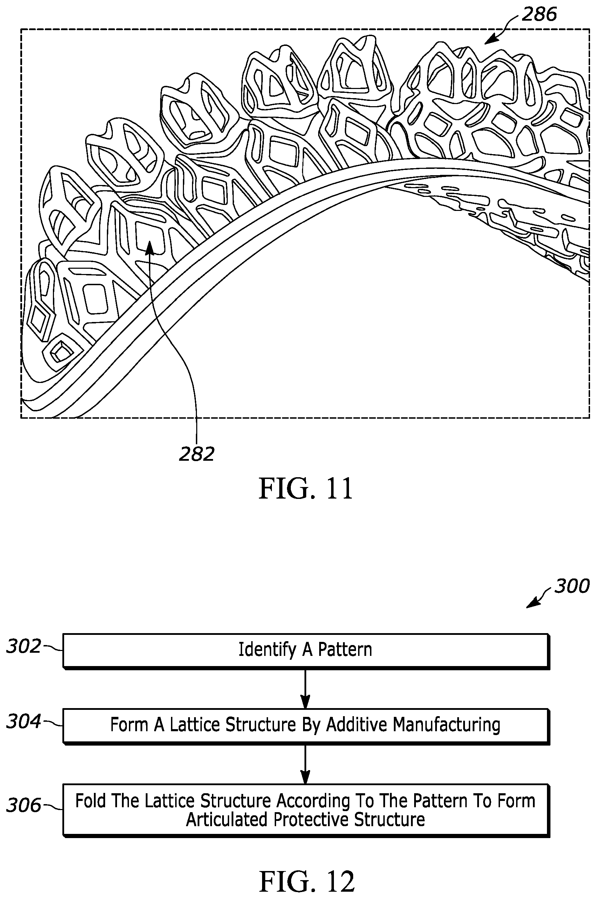

Turning to FIGS. 9-11, a composite structure 282 is depicted that is formed from both the first lattice structure 100 and the second lattice structure 200. Here, the composite structure 282 is a knee pad depicted on a mannequin. The first lattice structure 100 is used in a first area 284 of the composite structure 282 that benefits from the stability of additional structural connections, and the second lattice structure 200 is used in a second area 286 that benefits from greater flexibility. For example, when the composite structure 282 is a protective pad for a knee as shown, the first area 284 covers and protects the knee cap of a wearer with the stability of additional structural connections and the second area 286 is located below the knee cap to facilitate bending of the knee by the wearer. FIG. 11 illustrates the flexibility of the second area 286 as a result of use of the second lattice structure 200 in the composite structure 286.

In the composite structure 286, the first lattice structure 100 may be integral with the second lattice structure 200 or may be formed separately and later connected. The composite structure 286 includes at least a first area 284 of the first lattice structure 100 and a second area 284 of the second lattice structure 200 but may also optionally include additional areas with the first lattice structure 200, second lattice structure 200, another type of lattice structure, or a different structure or material.

FIG. 12 illustrates schematically a method 300 of manufacturing a protective pad including a lattice structure (such as first anisotropic lattice structure 100, second lattice structure 200, or a composite structure 286). At box 302, the method 300 includes identifying a pattern for a lattice structure to facilitate folding the lattice structure to form an articulated protective structure. The articulated protective structure may be configured to protect a human body part, such as the groin or breasts. The pattern may include tabs (such as tabs 202) for connecting areas of the first lattice structure 100 and/or second lattice structure 200 during folding. At box 304, the method 300 includes forming a first lattice structure 100, second lattice structure 200, or composite structure 286 by additive manufacturing. As described above the first lattice structure 100 includes a first layer 102 including a plurality of interior cells 104, a second layer 106 disposed on and overlaying the first layer 102 and including a plurality of exterior cells 108, and a plurality of channels 110 formed between unconnected adjacent exterior cells 108 above interconnected adjacent interior cells 104. The second lattice structure 200 includes a first layer 202 including a plurality of interior cells 204, a second layer 206 disposed on and overlaying the first layer 202 and including a plurality of exterior cells 208, and a plurality of channels 210 and a plurality of channels 280 formed between unconnected adjacent exterior cells 108 above interconnected adjacent interior cells 104. The composite structure 286 includes a first area 284 with the first lattice structure 100 and a second area 284 with the second lattice structure 200. At box 306, the method includes folding the lattice structure (i.e., lattice structure 100, lattice structure 200, or a composite structure 284 including both the lattice structure 100 and the lattice structure 200) according to the pattern to form the articulated protective structure. In some executions, the articulated protective structure may be secured within a garment. In some executions, the lattice structure may be secured within a housing comprising an air-permeable fabric such as mesh.

In additional executions, the method 300 may include providing a molded form. In some executions, providing a molded form includes milling a three-dimensional shape mimicking a human body part. The method 300 may include warping the first lattice structure 100, the second lattice structure 200, and/or a composite structure including both the first lattice structure 100 and the second lattice structure 200by placing the chosen lattice structure over the molded form during heat curing. In some executions, the first layer is placed adjacent the molded form during the warping of the chosen lattice structure.

An additive manufacturing technique of the foregoing method(s) using additive manufacturing and/or 3D printing may be any additive manufacturing technique or process that builds three-dimensional objects by adding successive layers of material on a material. The additive manufacturing technique may be performed by any suitable machine or combination of machines. The additive manufacturing technique may typically involve or use a computer, three-dimensional modeling software (e.g., Computer Aided Design, or CAD, software), machine equipment, and layering material. Once a CAD model is produced, the machine equipment may read in data from the CAD file and layer or add successive layers of liquid, powder, sheet material (for example) in a layer-upon-layer fashion to fabricate a three-dimensional object. The additive manufacturing technique may include any of several techniques or processes, such as, for example, a stereolithography ("SLA") process, a fused deposition modeling ("FDM") process, multi-jet modeling ("MJM") process, a selective laser sintering ("SLS") process, an electronic beam additive manufacturing process, and an arc welding additive manufacturing process. In some embodiments, the additive manufacturing process may include a directed energy laser deposition process. Such a directed energy laser deposition process may be performed by a multi-axis computer-numerically-controlled ("CNC") lathe with directed energy laser deposition capabilities.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. Additionally, the described embodiments/examples/implementations should not be interpreted as mutually exclusive, and should instead be understood as potentially combinable if such combinations are permissive in any way. In other words, any feature disclosed in any of the aforementioned embodiments/examples/implementations may be included in any of the other aforementioned embodiments/examples/implementations.

The benefits, advantages, solutions to problems, and any element(s) that may cause any benefit, advantage, or solution to occur or become more pronounced are not to be construed as a critical, required, or essential features or elements of any or all the claims. The claimed invention is defined solely by the appended claims.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

## Claims

1. A lattice structure (100, 200) for protective gear, comprising:
a first layer (102, 202) including a plurality of cells arranged along a first axis and a second axis that is perpendicular to the first axis, adjacent cells of the first layer (102, 202) along the first axis being interconnected and adjacent cells of the first layer (102, 202) along the second axis being interconnected;
a second layer (106, 206) disposed on and overlaying the first layer (102, 202), the second layer (106, 206) including a plurality of cells arranged along the first axis and the second axis,
**characterised in**
adjacent cells of the second layer (106, 206) along the first axis being unconnected;
and
a channel (110, 210, 280) formed between unconnected adjacent cells of the second layer (106, 206) and interconnected adjacent cells of the first layer (102, 202).

2. The lattice structure (100, 200) of claim 1, adjacent cells of the second layer (106, 206) along the second axis being interconnected.

3. The lattice structure (100, 200) of claim 1, adjacent cells of the second layer (106, 206) along the second axis being unconnected, wherein the channel (110, 210, 280) is a first channel (210) formed by the adjacent cells of the second layer (106, 206) along the first axis being unconnected, and wherein the lattice structure (100, 200) further includes a second channel (280) formed by the adjacent cells of the second layer (106, 206) along the second axis being unconnected.

4. The lattice structure (100, 200) of one of the preceding claims, including a first area (284) where adjacent cells of the second layer (106, 206) along the second axis are interconnected and a second area (286) where adjacent cells of the second layer (106, 206) along the second axis are unconnected.

5. The lattice structure (100, 200) of one of claims 1, 2, or 4, each cell of the second layer (106, 206) having an upper tubular frame (122, 222) and a lower tubular frame, the adjacent cells of the second layer (106, 206) along the second axis being interconnected by sharing a portion of the upper tubular frame (122, 222) that is oriented along the first axis and a portion of the lower tubular frame that is oriented along the first axis.

6. The lattice structure (100, 200) of one of the preceding claims, each cell of the second layer (106, 206) having an upper tubular frame (122, 222) that is not shared with an adjacent cell and a lower tubular frame that is not shared with an adjacent cell.

7. The lattice structure (100, 200) of one of the preceding claims, wherein the adjacent cells of the second layer (106, 206) along the first axis are offset from one another along the second axis.

8. The lattice structure (100, 200) of one of the preceding claims, each cell of the second layer (106, 206) having an upper tubular frame (122, 222) and a lower tubular frame, a portion of the upper tubular fame and the lower tubular frame that is not oriented along the first axis defining a side (116, 144, 150) of the channel (110, 210, 280), and/or each cell of the first layer having a base tubular frame, the adjacent cells of the first layer (102, 202) along the second axis being interconnected by sharing a portion of the base tubular frame that is oriented along the first axis, and/or each cell of the first layer (102, 202) having a plurality of compound connections (172), each compound connection (172) connected by a base tubular extension to a base eye (146), by a base segment (158) to a base tubular frame, and by a joining tubular extension to a lower eye of a cell of the second layer (106, 206), the compound connection (172) defining a bottom of the channel (110, 210, 280).

9. The lattice structure (100, 200) of one of claims 1, 2, 3, 5, 7, and 8, wherein said plurality of cells of said first layer (102, 202) are interior cells, wherein said second layer (106, 206) is located above the first layer (102, 202), and wherein said plurality of cells of said second layer (106, 206) are exterior cells.

10. The lattice structure (100, 200) of claim 9 when dependent on claim 3, wherein the adjacent exterior cells along the second axis are offset from one another along the first axis.

11. The lattice structure (100, 200) of claim 9 or 10, each exterior cell having
a central axis,
an upper eye (112) defined by a tubular structure surrounding the central axis and having a first opening (114) at the central axis, the upper eye (112) positioned at a top of the second layer (106, 206),
upper tubular extensions (120, 136) connected to the upper eye (112), the upper tubular extensions (120, 136) extending downward from the upper eye (112),
an upper tubular frame (122, 222) having upper segments (124), the upper segments (124) connected to one another and to the upper tubular extensions (120, 136) at upper joints (126), the upper segments (124) connected to one another and unconnected to the upper tubular extensions (120, 136) at frame connections (128), the upper joints (126) disposed above the frame connections (128),
a lower tubular frame having lower segments, the lower segments connected to one another and to the upper segments (124) at the frame connections (128), the lower segments connected to one another and unconnected to the upper segments (124) at lower joints, the frame connections (128) disposed above the lower joints,
lower tubular extensions connected to the lower tubular frame at the lower joints, the lower tubular extensions extending downward from the lower joints, and
a lower eye defined by a tubular structure surrounding the central axis and having a second opening (140) at the central axis, the lower eye connected to the lower tubular extensions.

12. The lattice structure (100, 200) of one of claims 9 to 11, each interior cell having
a central axis,
a base eye (146) defined by a tubular structure surrounding the central axis and having a base opening (148) at the central axis, the base eye (146) positioned at a bottom of the first layer (102, 202),
base tubular extensions connected to the base eye (146) and extending upward,
a base tubular frame having base segments (158), the base segments (158) connected only to one another and to the base tubular extensions at base joints (160),
a dampening tubular frame having dampening extensions (164), the dampening extensions (164) connected to the base segments (158) at base connections (166), the base connections (166) disposed above the base joints (160), and
joining tubular extensions configured to connect to the second layer (106, 206), the joining tubular extensions connected to the dampening extensions (164) at dampening joints (170), the dampening joints (170) disposed above the base connections (166), the joining tubular extensions connected to the base segments (158) and the base tubular extensions at compound connections (172).

13. A method (300) of manufacturing a protective pad including a lattice structure (100, 200), the method (300) comprising:
identifying a pattern for a lattice structure (100, 200) to facilitate folding the lattice structure (100, 200) to form an articulated protective structure;
forming the lattice structure (100, 200) by additive manufacturing according to the pattern, the lattice structure (100, 200) including a first layer (102, 202) including a plurality of interior cells, a second layer (106, 206) disposed on and overlaying the first layer (102, 202) and including a plurality of exterior cells, and a plurality of channels (110, 210, 280) formed between unconnected adjacent exterior cells above interconnected adjacent interior cells; and
folding the lattice structure (100, 200) according to the pattern to form the articulated protective structure.

14. The method (300) of claim 13, wherein the articulated protective structure is configured to protect a human body part, and/or wherein the pattern includes tabs for connecting areas of the lattice structuring during folding, or wherein the articulated protective structure is secured within a garment, or further comprising securing the lattice structure (100, 200) within a housing comprising air-permeable fabric, wherein the air-permeable fabric is preferably a mesh.

15. The method (300) according to claim 13 or 14, wherein the lattice structure (100, 200) is a lattice structure (100, 200) according to one of claims 1 to 12.

## Patentansprüche

1. Gitterstruktur (100, 200) für Schutzausrüstung, umfassend:
eine erste Schicht (102, 202), die eine Vielzahl von Zellen beinhaltet, die entlang einer ersten Achse und einer zweiten Achse, die senkrecht zu der ersten Achse ist, angeordnet sind, wobei benachbarte Zellen der ersten Schicht (102, 202) entlang der ersten Achse miteinander verbunden sind und benachbarte Zellen der ersten Schicht (102, 202) entlang der zweiten Achse miteinander verbunden sind;
eine zweite Schicht (106, 206), die auf der ersten Schicht (102, 202) angeordnet ist und diese überlagert, wobei die zweite Schicht (106, 206) eine Vielzahl von Zellen beinhaltet, die entlang der ersten Achse und der zweiten Achse angeordnet sind, **dadurch gekennzeichnet, dass** benachbarte Zellen der zweiten Schicht (106, 206) entlang der ersten Achse nicht verbunden sind; und
einen Kanal (110, 210, 280), der zwischen nicht verbundenen benachbarten Zellen der zweiten Schicht (106, 206) und miteinander verbundenen benachbarten Zellen der ersten Schicht (102, 202) gebildet ist.

2. Gitterstruktur (100, 200) nach Anspruch 1, wobei benachbarte Zellen der zweiten Schicht (106, 206) entlang der zweiten Achse miteinander verbunden sind.

3. Gitterstruktur (100, 200) nach Anspruch 1, wobei benachbarte Zellen der zweiten Schicht (106, 206) entlang der zweiten Achse nicht verbunden sind, wobei der Kanal (110, 210, 280) ein erster Kanal (210) ist, der durch die benachbarten Zellen der zweiten Schicht (106, 206) entlang der ersten Achse gebildet ist, die nicht verbunden sind, und wobei die Gitterstruktur (100, 200) ferner einen zweiten Kanal (280) beinhaltet, der durch die benachbarten Zellen der zweiten Schicht (106, 206) entlang der zweiten Achse gebildet ist, die nicht verbunden sind.

4. Gitterstruktur (100, 200) nach einem der vorhergehenden Ansprüche, beinhaltend einen ersten Bereich (284), in dem benachbarte Zellen der zweiten Schicht (106, 206) entlang der zweiten Achse miteinander verbunden sind, und einen zweiten Bereich (286), in dem benachbarte Zellen der zweiten Schicht (106, 206) entlang der zweiten Achse nicht verbunden sind.

5. Gitterstruktur (100, 200) nach einem der Ansprüche 1, 2 oder 4, wobei jede Zelle der zweiten Schicht (106, 206) einen oberen röhrenförmigen Rahmen (122, 222) und einen unteren röhrenförmigen Rahmen aufweist, wobei die benachbarten Zellen der zweiten Schicht (106, 206) entlang der zweiten Achse durch gemeinsames Nutzen eines Abschnitts des oberen röhrenförmigen Rahmens (122, 222), der entlang der ersten Achse ausgerichtet ist, und eines Abschnitts des unteren röhrenförmigen Rahmens, der entlang der ersten Achse ausgerichtet ist, miteinander verbunden sind.

6. Gitterstruktur (100, 200) nach einem der vorhergehenden Ansprüche, wobei jede Zelle der zweiten Schicht (106, 206) einen oberen röhrenförmigen Rahmen (122, 222), der nicht mit einer benachbarten Zelle gemeinsam genutzt wird, und einen unteren röhrenförmigen Rahmen, der nicht mit einer benachbarten Zelle gemeinsam genutzt wird, aufweist.

7. Gitterstruktur (100, 200) nach einem der vorhergehenden Ansprüche, wobei die benachbarten Zellen der zweiten Schicht (106, 206) entlang der ersten Achse entlang der zweiten Achse voneinander versetzt sind.

8. Gitterstruktur (100, 200) nach einem der vorhergehenden Ansprüche, wobei jede Zelle der zweiten Schicht (106, 206) einen oberen röhrenförmigen Rahmen (122, 222) und einen unteren röhrenförmigen Rahmen aufweist, wobei ein Abschnitt des oberen röhrenförmigen Rahmens und des unteren röhrenförmigen Rahmens, der nicht entlang der ersten Achse ausgerichtet ist, eine Seite (116, 144, 150) des Kanals (110, 210, 280) definiert, und/oder wobei jede Zelle der ersten Schicht einen röhrenförmigen Grundrahmen aufweist, wobei die benachbarten Zellen der ersten Schicht (102, 202) entlang der zweiten Achse durch gemeinsames Nutzen eines Abschnitts des röhrenförmigen Grundrahmens, der entlang der ersten Achse ausgerichtet ist, miteinander verbunden sind, und/oder wobei jede Zelle der ersten Schicht (102, 202) eine Vielzahl von Verbundverbindungen (172) aufweist, wobei jede Verbundverbindung (172) durch eine röhrenförmige Grundverlängerung mit einer Grundöse (146), durch ein Grundsegment (158) mit einem röhrenförmigen Grundrahmen und durch eine röhrenförmige Verbindungsverlängerung mit einer unteren Öse einer Zelle der zweiten Schicht (106, 206) verbunden ist, wobei die Verbundverbindung (172) einen Boden des Kanals (110, 210, 280) definiert.

9. Gitterstruktur (100, 200) nach einem der Ansprüche 1, 2, 3, 5, 7 und 8, wobei die Vielzahl von Zellen der ersten Schicht (102, 202) Innenzellen sind, wobei die zweite Schicht (106, 206) über der ersten Schicht (102, 202) angeordnet ist und wobei die Vielzahl von Zellen der zweiten Schicht (106, 206) Außenzellen sind.

10. Gitterstruktur (100, 200) nach Anspruch 9, wenn abhängig von Anspruch 3, wobei die benachbarten Außenzellen entlang der zweiten Achse entlang der ersten Achse voneinander versetzt sind.

11. Gitterstruktur (100, 200) nach Anspruch 9 oder 10, wobei jede Außenzelle Folgendes aufweist:
eine Mittelachse,
eine obere Öse (112), die durch eine röhrenförmige Struktur definiert ist, die die Mittelachse umgibt und eine erste Öffnung (114) an der Mittelachse aufweist, wobei die obere Öse (112) an einer Oberseite der zweiten Schicht (106, 206) positioniert ist,
obere röhrenförmige Verlängerungen (120, 136), die mit der oberen Öse (112) verbunden sind, wobei sich die oberen röhrenförmigen Verlängerungen (120, 136) von der oberen Öse (112) nach unten erstrecken,
einen oberen röhrenförmigen Rahmen (122, 222), der obere Segmente (124) aufweist, wobei die oberen Segmente (124) miteinander und mit den oberen röhrenförmigen Verlängerungen (120, 136) an oberen Verbindungen (126) verbunden sind, wobei die oberen Segmente (124) miteinander und nicht mit den oberen röhrenförmigen Verlängerungen (120, 136) an Rahmenverbindungen (128) verbunden sind, wobei die oberen Verbindungen (126) über den Rahmenverbindungen (128) angeordnet sind,
einen unteren röhrenförmigen Rahmen, der untere Segmente aufweist, wobei die unteren Segmente miteinander und mit den oberen Segmenten (124) an den Rahmenverbindungen (128) verbunden sind, wobei die unteren Segmente miteinander und nicht mit den oberen Segmenten (124) an unteren Verbindungen verbunden sind, wobei die Rahmenverbindungen (128) über den unteren Verbindungen angeordnet sind, untere röhrenförmige Verlängerungen, die mit dem unteren röhrenförmigen Rahmen an den unteren Verbindungen verbunden sind, wobei sich die unteren röhrenförmigen Verlängerungen von den unteren Verbindungen nach unten erstrecken, und
eine untere Öse, die durch eine röhrenförmige Struktur definiert ist, die die Mittelachse umgibt und eine zweite Öffnung (140) an der Mittelachse aufweist, wobei die untere Öse mit den unteren röhrenförmigen Verlängerungen verbunden ist.

12. Gitterstruktur (100, 200) nach einem der Ansprüche 9 bis 11, wobei jede Innenzelle Folgendes aufweist:
eine Mittelachse,
eine Basisöse (146), die durch eine röhrenförmige Struktur definiert ist, die die Mittelachse umgibt und eine Basisöffnung (148) an der Mittelachse aufweist, wobei die Basisöse (146) an einer Unterseite der ersten Schicht (102, 202) positioniert ist,
röhrenförmige Grundverlängerungen, die mit der Basisöse (146) verbunden sind und sich nach oben erstrecken,
einen röhrenförmigen Grundrahmen, der Grundsegmente (158) aufweist, wobei die Grundsegmente (158) nur miteinander und mit den röhrenförmigen Grundverlängerungen an Basisverbindungen (160) verbunden sind,
einen röhrenförmigen Dämpfungsrahmen, der Dämpfungsverlängerungen (164) aufweist, wobei die Dämpfungsverlängerungen (164) mit den Grundsegmenten (158) an Grundverbindungen (166) verbunden sind, wobei die Grundverbindungen (166) über den Grundverbindungen (160) angeordnet sind, und
röhrenförmige Verbindungsverlängerungen, die konfiguriert sind, um mit der zweiten Schicht (106, 206) verbunden zu werden, wobei die röhrenförmigen Verbindungsverlängerungen mit den Dämpfungsverlängerungen (164) an Dämpfungsverbindungen (170) verbunden sind, wobei die Dämpfungsverbindungen (170) über den Grundverbindungen (166) angeordnet sind, wobei die röhrenförmigen Verbindungsverlängerungen mit den Grundsegmenten (158) und den röhrenförmigen Grundverlängerungen an Verbundverbindungen (172) verbunden sind.

13. Verfahren (300) zum Herstellen eines Schutzpolsters, das eine Gitterstruktur (100, 200) beinhaltet, wobei das Verfahren (300) Folgendes umfasst:
Identifizieren eines Musters für eine Gitterstruktur (100, 200), um das Falten der Gitterstruktur (100, 200) zu erleichtern, um eine gelenkige Schutzstruktur zu bilden;
Bilden der Gitterstruktur (100, 200) durch additive Herstellung gemäß dem Muster, wobei die Gitterstruktur (100, 200) Folgendes beinhaltet: eine erste Schicht (102, 202), die eine Vielzahl von Innenzellen beinhaltet, eine zweite Schicht (106, 206), die auf der ersten Schicht (102, 202) angeordnet ist und diese überlagert und eine Vielzahl von Außenzellen beinhaltet, und einer Vielzahl von Kanälen (110, 210, 280), die zwischen nicht verbundenen benachbarten Außenzellen über miteinander verbundenen benachbarten Innenzellen gebildet sind; und
Falten der Gitterstruktur (100, 200) gemäß dem Muster, um die gelenkige Schutzstruktur zu bilden.

14. Verfahren (300) nach Anspruch 13, wobei die gelenkige Schutzstruktur konfiguriert ist, um einen menschlichen Körperteil zu schützen, und/oder wobei das Muster Laschen zum Verbinden von Bereichen der Gitterstruktur während des Faltens beinhaltet, oder wobei die gelenkige Schutzstruktur innerhalb eines Kleidungsstücks gesichert ist, oder ferner umfassend das Sichern der Gitterstruktur (100, 200) innerhalb eines Gehäuses, das luftdurchlässiges Gewebe umfasst, wobei das luftdurchlässige Gewebe vorzugsweise ein Netz ist.

15. Verfahren (300) nach Anspruch 13 oder 14, wobei die Gitterstruktur (100, 200) eine Gitterstruktur (100, 200) nach einem der Ansprüche 1 bis 12 ist.

## Revendications

1. Structure en treillis (100, 200) pour équipement de protection, comprenant : une première couche (102, 202) comprenant une pluralité de cellules disposées selon un premier axe et un second axe qui est perpendiculaire au premier axe, les cellules adjacentes de la première couche (102, 202) selon le premier axe étant interconnectées et les cellules adjacentes de la première couche (102, 202) selon le second axe étant interconnectées ; une seconde couche (106, 206) qui est disposée sur et recouvrant la première couche (102, 202), la seconde couche (106, 206) comprenant une pluralité de cellules disposées selon le premier axe et le second axe,
**caractérisée en ce que**
les cellules adjacentes de la seconde couche (106, 206) selon le premier axe sont non connectées ; et
un canal (110, 210, 280) est formé entre les cellules adjacentes non connectées de la seconde couche (106, 206) et les cellules adjacentes interconnectées de la première couche (102, 202).

2. Structure en treillis (100, 200) selon la revendication 1, les cellules adjacentes de la seconde couche (106, 206) selon le second axe étant interconnectées.

3. Structure en treillis (100, 200) selon la revendication 1, les cellules adjacentes de la seconde couche (106, 206) selon le second axe étant non connectées, lequel canal (110, 210, 280) est un premier canal (210) formé par les cellules adjacentes de la seconde couche (106, 206) selon le premier axe étant non connectées, et lequel structure en treillis (100, 200) comprend en outre un second canal (280) formé par les cellules adjacentes de la seconde couche (106, 206) selon le second axe étant non connectées.

4. Structure en treillis (100, 200) selon l'une quelconque des revendications précédentes, comprenant une première zone (284) où les cellules adjacentes de la seconde couche (106, 206) selon le second axe sont interconnectées et une seconde zone (286) où les cellules adjacentes de la seconde couche (106, 206) selon le second axe sont non connectées.

5. Structure en treillis (100, 200) selon l'une quelconque des revendications 1, 2 ou 4, chaque cellule de la seconde couche (106, 206) ayant un cadre tubulaire supérieur (122, 222) et un cadre tubulaire inférieur, les cellules adjacentes de la seconde couche (106, 206) selon le second axe étant interconnectées par le partage d'une portion du cadre tubulaire supérieur (122, 222) qui est orientée selon le premier axe et d'une portion du cadre tubulaire inférieur qui est orientée selon le premier axe.

6. Structure en treillis (100, 200) selon l'une quelconque des revendications précédentes, chaque cellule de la seconde couche (106, 206) ayant un cadre tubulaire supérieur (122, 222) qui n'est pas partagé avec une cellule adjacente et un cadre tubulaire inférieur qui n'est pas partagé avec une cellule adjacente.

7. Structure en treillis (100, 200) selon l'une quelconque des revendications précédentes, lequel les cellules adjacentes de la seconde couche (106, 206) selon le premier axe sont décalées les unes par rapport aux autres selon le second axe.

8. Structure en treillis (100, 200) selon l'une quelconque des revendications précédentes, chaque cellule de la seconde couche (106, 206) ayant un cadre tubulaire supérieur (122, 222) et un cadre tubulaire inférieur, une portion du cadre tubulaire supérieur et du cadre tubulaire inférieur qui n'est pas orientée selon le premier axe définissant un côté (116, 144, 150) du canal (110, 210, 280), et/ou chaque cellule de la première couche ayant un cadre tubulaire de base, les cellules adjacentes de la première couche (102, 202) selon le second axe étant interconnectées par le partage d'une portion du cadre tubulaire de base qui est orientée selon le premier axe, et/ou chaque cellule de la première couche (102, 202) ayant une pluralité de connexions composées (172), chaque connexion composée (172) étant connectée par une extension tubulaire de base à un œillet de base (146), par un segment de base (158) à un cadre tubulaire de base, et par une extension tubulaire de jonction à un œillet inférieur d'une cellule de la seconde couche (106, 206), la connexion composée (172) définissant un fond du canal (110, 210, 280).

9. Structure en treillis (100, 200) selon l'une quelconque des revendications 1, 2, 3, 5, 7 et 8, lequel ladite pluralité de cellules de ladite première couche (102, 202) sont des cellules intérieures, lequel ladite seconde couche (106, 206) est située au-dessus de la première couche (102, 202), et lequel ladite pluralité de cellules de ladite seconde couche (106, 206) sont des cellules extérieures.

10. Structure en treillis (100, 200) selon la revendication 9 dépendant de la revendication 3, lequel les cellules extérieures adjacentes selon le second axe sont décalées les unes par rapport aux autres selon le premier axe.

11. Structure en treillis (100, 200) selon la revendication 9 ou 10, chaque cellule extérieure ayant
un axe central,
un œillet supérieur (112) défini par une structure tubulaire entourant l'axe central et ayant une première ouverture (114) à l'axe central, l'œillet supérieur (112) étant positionné au sommet de la seconde couche (106, 206),
des extensions tubulaires supérieures (120, 136) connectées à l'œillet supérieur (112), les extensions tubulaires supérieures (120, 136) s'étendant vers le bas à partir de l'œillet supérieur (112),
un cadre tubulaire supérieur (122, 222) ayant des segments supérieurs (124), les segments supérieurs (124) étant connectés les uns aux autres et aux extensions tubulaires supérieures (120, 136) aux articulations supérieures (126), les segments supérieurs (124) étant connectés les uns aux autres et non connectés aux extensions tubulaires supérieures (120, 136) aux connexions de cadre (128), les articulations supérieures (126) étant disposées au-dessus des connexions de cadre (128),
un cadre tubulaire inférieur ayant des segments inférieurs, les segments inférieurs étant connectés les uns aux autres et aux segments supérieurs (124) aux connexions de cadre (128), les segments inférieurs étant connectés les uns aux autres et non connectés aux segments supérieurs (124) aux articulations inférieures, les connexions de cadre (128) étant disposées au-dessus des articulations inférieures,
des extensions tubulaires inférieures connectées au cadre tubulaire inférieur aux articulations inférieures, les extensions tubulaires inférieures s'étendant vers le bas à partir des articulations inférieures, et
un œillet inférieur défini par une structure tubulaire entourant l'axe central et ayant une seconde ouverture (140) à l'axe central, l'œillet inférieur étant connecté aux extensions tubulaires inférieures.

12. Structure en treillis (100, 200) selon l'une quelconque des revendications 9 à 11, chaque cellule intérieure ayant un axe central,
un œillet de base (146) défini par une structure tubulaire entourant l'axe central et ayant une ouverture de base (148) à l'axe central, l'œillet de base (146) étant positionné au fond de la première couche (102, 202),
des extensions tubulaires de base connectées à l'œillet de base (146) et s'étendant vers le haut,
un cadre tubulaire de base ayant des segments de base (158), les segments de base (158) étant connectés uniquement les uns aux autres et aux extensions tubulaires de base aux articulations de base (160),
un cadre tubulaire d'amortissement ayant des extensions d'amortissement (164), les extensions d'amortissement (164) étant connectées aux segments de base (158) aux connexions de base (166), les connexions de base (166) étant disposées au-dessus des articulations de base (160), et
des extensions tubulaires de jonction configurées pour se connecter à la seconde couche (106, 206), les extensions tubulaires de jonction étant connectées aux extensions d'amortissement (164) aux articulations d'amortissement (170), les articulations d'amortissement (170) étant disposées au-dessus des connexions de base (166), les extensions tubulaires de jonction étant connectées aux segments de base (158) et aux extensions tubulaires de base aux connexions composées (172).

13. Procédé (300) de fabrication d'un coussinet de protection comprenant une structure en treillis (100, 200), le procédé (300) comprenant :
l'identification d'un motif pour une structure en treillis (100, 200) afin de faciliter le pliage de la structure en treillis (100, 200) pour former une structure de protection articulée ;
la formation de la structure en treillis (100, 200) par fabrication additive selon le motif, la structure en treillis (100, 200) comprenant une première couche (102, 202) comprenant une pluralité de cellules intérieures, une seconde couche (106, 206) disposée sur et recouvrant la première couche (102, 202) et comprenant une pluralité de cellules extérieures, et une pluralité de canaux (110, 210, 280) formés entre des cellules extérieures adjacentes non connectées au-dessus de cellules intérieures adjacentes interconnectées ; et
le pliage de la structure en treillis (100, 200) selon le motif pour former la structure de protection articulée.

14. Procédé (300) selon la revendication 13, lequel la structure de protection articulée est configurée pour protéger une partie du corps humain, et/ou lequel le motif comprend des languettes pour connecter des zones de la structure en treillis lors du pliage, ou lequel la structure de protection articulée est fixée à l'intérieur d'un vêtement, ou comprenant en outre la fixation de la structure en treillis (100, 200) à l'intérieur d'un logement comprenant un tissu perméable à l'air, lequel tissu perméable à l'air est de préférence une maille.

15. Procédé (300) selon la revendication 13 ou 14, lequel la structure en treillis (100, 200) est une structure en treillis (100, 200) selon l'une quelconque des revendications 1 à 12.
